# EUROPÄISCHE PATENTSCHRIFT

(11) **EP 1 189 716 B1**
(45) Veröffentlichungstag und Bekanntmachung des Hinweises auf die Patenterteilung: **12.05.2004**
(21) Anmeldenummer: 00935217.0
(22) Anmeldetag: 16.06.2000
(51) Int. Cl.: B22F 3/00

(54) **EINRICHTUNG ZUM ZUFÜHREN VON PULVER FÜR EINE VORRICHTUNG ZUM SCHICHTWEISEN HERSTELLEN EINES DREIDIMENSIONALEN OBJEKTES**
DEVICE FOR SUPPLYING POWDER FOR A DEVICE USED FOR PRODUCING A THREE-DIMENSIONAL OBJECT LAYER BY LAYER
DISPOSITIF DE DEPOT DE POUDRE POUR UN DISPOSITIF DE FABRICATION COUCHE PAR COUCHE D'UN OBJET TRIDIMENSIONNEL

(30) Priorität: 21.06.1999 DE 19928245
(43) Veröffentlichungstag der Anmeldung: 27.03.2002
(73) Patentinhaber: EOS GmbH Electro Optical Systems, 82152 Krailling (DE)
(72) Erfinder: PERRET, Hans, D-80333 München (DE); GRAF, Bernhard-Franz, D-86938 Schondorf (DE); SAGMEISTER, Ulli, Christian, D-84389 Postmünster (DE)
(74) Vertreter: Prüfer, Lutz H., Dipl.-Phys.
(86) Internationale Anmeldenummer: PCT/EP2000/005558
(87) Internationale Veröffentlichungsnummer: WO 2000/078485

(56) Entgegenhaltungen:
- WO-A-95/34468
- DE-A- 19 530 296
- US-A- 5 387 380
- US-A- 5 637 175
- US-A- 5 647 931
- US-A- 6 046 426

## Beschreibung

Die Erfindung betrifft eine Einrichtung zum Zuführen von Pulver auf eine ebene Fläche einer Vorrichtung zum schichtweisen Herstellen eines dreidimensionalen Objektes nach dem Oberbegriff des Patentanspruches 1.

Vorrichtungen zum schichtweisen Herstellen eines dreidimensionalen Objektes sind beispielsweise aus der WO 95/18715, der WO 98/18124 und der EP 0 882 568 bekannt. Mittels derartiger Vorrichtungen wird ein dreidimensionales Objekt durch selektives Verfestigen von aufeinanderfolgenden Schichten eines pulverförmigen Materials an dem jeweiligen Querschnitt des Objektes entsprechenden Stellen z. B. durch Einwirkung eines Laserstrahles hergestellt.

Bei einer bekannten derartigen Einrichtung wird jeweils in einer seitlichen Endstellung eine vorbestimmte Menge Pulver aus einem Vorratsbehälter in die Beschichtungseinrichtung gegeben. Um sicherzustellen, daß in jeder Schicht die gesamte Fläche zuverlässig mit Pulver beschichtet wird, muß die vorbestimmte Menge größer als die theoretisch notwendige Menge sein. Bedingt durch die ungleichmäßige Verfestigung in der jeweils vorhergehenden Schicht über die Breite der Fläche gesehen, ist der Pulververbrauch in einzelnen Abschnitten der Beschichtungseinrichtung unterschiedlich. Aus diesem Grunde wird jeweils vor der nächsten Befüllung oder nach einer bestimmten Zahl von Beschichtungsvorgängen die Beschichtungseinrichtung über die gesamte Breite entleert, ehe eine neue Befüllung mit einer vorgegebenen Pulvermenge über die gesamte Breite erfolgt. Dadurch wird einerseits ein relativ hoher Pulverbrauch bewirkt. Das Pulver muß dann rezirkuliert werden Andererseits wird der Vorgang durch den erforderlichen Entleerungsvorgang verlängert.

Eine Vorrichtung bei der die vorbestimmte Menge an Pulver, die in die Beschichtungseinrichtung gegeben wird, größer ist als die theoretisch notwendige Menge und bei der das überschüssige Pulver nach jedem Beschichtungsvorgang entleert wird, ist aus der WO 95/18715 bekannt.

Aus der US 5,647,931 ist eine Einrichtung zum Zuführen von Pulver auf eine ebene Fläche einer Einrichtung zum schichtweisen Herstellen eines drei dimensionalen Objektes bekannt, die einen Beschichter und einen Oberhalb des Beschichtes angeordneten Vorratsbehälter mit eine Kerbwalze zur Befüllung des Beschichters aufweist. Aus der WO95/34468 ist eine Vorrichtung zum Herstellen eines dreidimensionalen Objekts bekannt, mit einer Unterlage, einer Vorrichtung zum Aufbringen einer Schicht eines Materials auf die Unterlage, wobei die Aufbringvorrichtung einen bewegbaren Behälter für das Material aufweist, wobei der Behälter als eine sich quer über die Unterlage erstreckende Rinne mit einer oberen Öffnung zum Einfüllen des Materials und einer unteren Öffnung zum Auftragen des Materials ausgebildet ist.

Aufgabe der Erfindung ist es, die oben beschriebenen Nachteile zu vermeiden.

Diese Aufgabe wird durch die in Patentanspruch 1 oder 5 gekennzeichnete Einrichtung gelöst.

Weitere Merkmale und Zweckmäßigkeiten der Erfindung ergeben sich aus der Beschreibung von Ausführungsbeispielen anhand der Figuren. Von den Figuren zeigen:
- Fig. 1: eine Schnitt-Seitenansicht einer ersten Ausführungsform;
- Fig. 2: eine entsprechende Seitenansicht einer zweiten Ausführungsform;

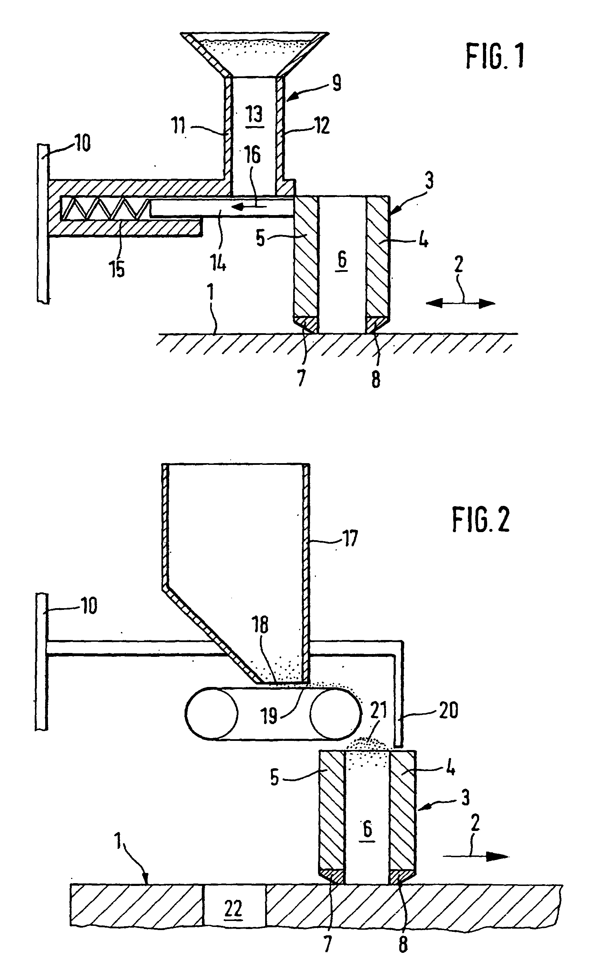

In Fig. 1 ist eine Fläche 1 gezeigt, die sich in einer ersten sich quer zur Zeichnungsebene erstreckenden Richtung und einer sich zur ersten Richtung quer erstreckenden, durch einen Pfeil 2 angedeutete zweite Richtung erstreckt. Diese Fläche 1 wird in jedem Zyklus des Lasersinterns in bekannter Weise mit einem Pulver beaufschlagt, welches in Abhängigkeit von der Geometrie des zu erzeugenden Gegenstandes an den sich aus der Geometrie ergebenden Stellen mittels eines Laserstrahles versintert wird. Nach Abschluß eines jeden Zyklus ist die Oberfläche erneut mit Pulver zu beaufschlagen, ehe ein weiteres Sintern mittels des Lasers erfolgen kann.

Zu diesem Zweck weist die in Fig. 1 gezeigte Vorrichtung eine sich in der ersten Richtung über die gesamte Breite der Fläche 1 erstreckende Beschichtungseinrichtung 3 auf. Diese weist zwei in einem Abstand voneinander befindliche Wände 4, 5 auf, welche sich über die gesamte Breite erstrecken und zwischen sich einen oben und unten offenen Schlitz 6 bilden. An ihrem der Fläche 1 benachbarten unteren Ende weisen die Wände 4, 5 Glättelemente 7, 8 auf. Diese können in bekannter Weise als Gummilippen oder als Metallklingen ausgebildet sein. Alternativ sind die Glättelemente aus Keramik gebildet. Die Beschichtungseinrichtung 3 wird an ihren beiden einander gegenüberliegenden Enden oder an einem Ende in dem Rahmen der Einrichtung so geführt, daß ein Hin- und Herbewegen der Beschichtungseinrichtung 3 über die gesamte Fläche 1 möglich ist.

In der in Fig. 1 gezeigten Ausführungsform befindet sich die Beschichtungseinrichtung 3 nahe an ihrer einen Endstellung. Es ist ein Vorratsbehälter 9 vorgesehen, der von dem Maschinenrahmen 10 getragen ist und der ebenfalls eine vertikal angeordnete erste Wand 11 und eine dazu parallele und in einem vorbestimmten Abstand angeordnete zweite Wand 12 aufweist. Die beiden Wände 11, 12 erstrecken sich parallel zu den Wänden 4 und 5 der Beschichtungseinrichtung und ebenfalls über die gesamte Breite der Fläche 1, auf jeden Fall aber wenigstens über die gleiche Strecke wie die Wände 4 und 5. Der Abstand der beiden Wände voneinander ist vorzugsweise gleich oder nur unwesentlich kleiner als der Abstand der bieden Wände 4 und 5 zueinander, so daß sie einen ebenfalls oben und unten offenen Schlitz 13 bilden, der gleich oder nur unwesentlich kleiner ist als der Schlitz 6.

Die Position der beiden Wände 11, 12 und damit des Schlitzes 13 ist so gewählt, daß sich der Schlitz 13 genau über dem Schlitz 6 befindet, wenn die Beschichtungseinrichtung 3 auf der zugehörigen Seite in eine Endstellung bewegt ist.

Die Höhe des Schlitzes 13 ist so gewählt, daß das Volumen des Schlitzes pro Längeneinheit wenigstens gleich dem Volumen pro Längeneinheit des darunter anzuordnenden Schlitzes 6 und vorzugsweise etwas größer ist.

Wie am besten aus Fig. 1 ersichtlich ist, weist der Vorratsbehälter 9 auf seiner Unterseite einen Schieberverschluß 14 auf, der in der in Fig. 1 gezeigten Stellung den Boden des Schlitzes 13 über seine gesamte Breite verschließt. Der Schieberverschluß 14 ist in einer Führung 15 so gelagert, daß er sich aus der gezeigten Schließstellung durch Anschlagen der Beschichtungsvorrichtung 3 in eine Öffnungsstellung bewegen läßt und dabei die untere Öffnung des Schlitzes 13 so weit freigibt, wie die Beschichtungseinrichtung 3 unter die Öffnung gefahren ist. Fährt die Beschichtungseinrichtung 3 aus der. unter dem Schlitz 13 liegenden Endstellung wieder über die Fläche 1 hinweg, schließt der Schieberverschluß 14 aufgrund einer schematisch angedeuteten Federvorspannung den Schlitz 13 dicht ab.

Wie aus Fig. 1 ersichtlich ist, ist der Vorratsbehälter 9 höhenmäßig genau so angeordnet, daß die Oberkanten der Wände 4, 5 an den Unterkanten der Wände 11, 12 entlangleiten.

Zum Bewegen der Beschichtungseinrichtung 3 ist in bekannter Weise ein motorischer Antrieb vorgesehen.

Im Betrieb ist zunächst der Schlitz 13 mit Pulver gefüllt. Die Beschichtungseinrichtung 3 wird dann in die längsseitige Endstellung gefahren, wodurch sich der Schieberverschluß 14 in die Öffnungsstellung bewegt und damit die untere Öffnung 13 des Schlitzes freigegeben wird. Das Pulver fällt in den darunter befindlichen Schlitz 6 über die gesamte Breite und füllt den Schlitz bis zum oberen Rand aus. Bei dem anschließenden Wegbewegen der Beschichtungseinrichtung 3 bewirkt der untere Rand der zweiten Wand 12 ein Glätten des Inhaltes des Pulvers im Schlitz 6 und Rückbehalten von Pulver welches sonst über den Rand des Schlitzes 6 hervorstehen könnte.

Die so befüllte Beschichtungseinrichtung verteilt das Pulver in dem nächsten Arbeitszyklus.

Vorzugsweise sind auf beiden einander gegenüberliegenden Seiten der Fläche 1 einander entsprechende Vorratsbehälter mit Schieberverschluß und Halterung vorgesehen, so daß auch ein beidseitigegs Befüllen möglich ist.

In Fig. 2 ist eine zweite Ausführungsform gezeigt, bei der die Merkmale, die mit denjenigen der ersten Ausführungsform übereinstimmen, jeweils mit den gleichen Bezugszeichen gekennzeichnet sind.

Auch bei der Ausführungsform ist wie bei der ersten die Beschichtungseinrichtung vorgesehen, die über die Fläche 1 bewegbar ist. Die Zuführung des Pulvermaterials ist jedoch unterschiedlich ausgebildet. Diese weist einen Vorratsbehälter 17 auf, welcher sich in gleicher Weise wie der Vorratsbehälter 9 über die gesamte Breite der Fläche und wenigstens über die gesamte Breite des Schlitzes 6 erstreckt und welcher eine untenliegende schlitzförmige Öffnung 18 aufweist. Unmittelbar unterhalb der Öffnung ist ein sich parallel zu der schlitzförmigen Öffnung und horizontal erstreckendes Transportband 19 vorgesehen, welches über zwei einander gegenüberliegen Umlenkrollen geführt und motorisch antreibar ist. Wie aus Fig. 2 ersichtlich ist, ist die Einrichtung so ausgebildet, daß die Füllstellung der Beschichtungseinrichtung 3 in einer Position unterhalb des einen Endes des Transportbandes 19 liegt.

Der Vorratsbehälter 17 ist wiederrum an dem Maschinenrahmen 10 festmontiert. Er weist zusätzlich einen Abstreifer 20 auf, der sich über die gesamte Breite der Wandungen 4, 5 erstreckt und oberhalb derjenigen Wand 4 angeordnet ist, die derjenigen Richtung zugewandt ist, in der die Beschichtungseinrichtung 3 nach dem Befüllen zur Durchführung des Beschichtungsvorganges bewegt wird. Der Abstreifer 20 liegt unmittelbar am oberen Rand der Wände 4, 5 der Beschichtungseinrichtung 3.

Im Betrieb wird das Transportband 19 so in Bewegung gesetzt, daß es das im Vorratsbehälter 17 befindliche Pulver in den Schlitz 6 transportiert, sobald die Beschichtungseinrichtung 3 die in Fig. 2 gezeigte Füllstellung erreicht hat. Ist das angedeutete Füllniveau erreicht, wird das Transportband 19 abgeschaltet, und die Beschichtungseinrichtung 3 wird über ihren motorischen Antrieb in Richtung des Pfeiles 2 über die Fläche 1 bewegt. Dabei wird über den Schlitz hinausstehendes Pulver 21 von dem Abstreifer 20 zurückbehalten und fällt hinter der Wand 5 auf den Boden, so daß erreicht wird, daß der Schlitz über seine gesamte Breite gleichmäßig befüllt ist.

Das Erreichen des Füllniveaus wird bespielsweise mittels eines Sensors erkannt. Alternativ ist es auch möglich durch Laufenlassen des Transportbandes über einen vorbestimmten Zeitraum ein vorbestimmtes Füllniveau zu erhalten.

Wie aus Fig. 2 ersichtlich ist, ist eine bodenseitige Öffnung 22 vorgesehen, die mit einem nichtgezeigten Aufnahmebehälter für überschüssiges Pulver verbunden ist. Das auf dem Boden befindliche abgestreifte Pulver wird bei dem nächsten Füllvorgang mittels der Glättelemente in die Öffnung 22 geschoben und zum Wiederverbrauch aufgefangen.

Die Erfindung ist nicht auf eine Einrichtung zum Zuführen von Pulver für eine Lasersinteranlage beschränkt. Die Einrichtung kann beispielsweise auch in einer Vorrichtung zum schichtweisen Herstellen eines dreidimensionalen Objektes verwendet werden, bei der die Verfestigung des Pulvers durch Zugabe eines Binders bzw. Klebers erfolgt.

## Patentansprüche

1. Einrichtung zum Zuführen von Pulver auf eine ebene Fläche (1) einer Einrichtung zum schichtweisen Herstellen eines drei-dimensionales Objektes, mit einer sich in einer ersten Richtung der Fläche quer über diese erstreckenden Beschichtungseinrichtung (3) mit gegenüberliegenden Seitenwänden (4,5), die in einer sich quer zur ersten Richtung erstreckenden zweiten Richtung mittels eines Antriebes zwischen einer seitlichen ersten Stellungund einer auf der gegenüberliegenden Seite liegenden zweiten Stellung hin-und herbewegbar ist und in wenigstens einer der Stellungen von oben mit Pulver befüllbar ist, wobei die Beschichtungseinrichtung (3) einen sich über die gesamte Breite der Fläche erstreckenden oben und unten offenen Raum (6) aufweist und daß ein Vorratsbehälter (9) mit gegenüberliegenden Seitenwänden (11,12) vorgesehen ist, der Vorratsbehälter (9) in der einen seitlichen Endstellung der Beschichtungseinrichtung (3) an diese zur Beschichtung dienendes Material abgibt, wobei der Raum über seine gesamte Breite auf eine vorbestimmte Höhe befüllt wird,
der Vorratsbehälter sich wenigstens über die gesamte Breite des Raums erstreckt,
und wobei die Oberkanten der Seitenwände (4,5) der Beschichtungseinrichtung (3) an den Unterkanten der Seitenwände (11,12) des Vorratsbehälters (9) entlanggleiten.

2. Einrichtung nach Anspruch 1, **dadurch gekennzeichnet, daß** der Vorratsbehälter (9) oberhalb der Beschichtungsvorrichtung(3) vorgesehen ist.

3. Einrichtung nach Anspruch 2, **dadurch gekennzeichnet, daß** das Volumen des Vorratsbehälters (9) pro Längeneinheit wenigstens gleich dem Volumen pro Längeneinheit des darunter befindlichen Raums (6) ist.

4. Einrichtung nach einem der Ansprüche 1 bis 3, **dadurch gekennzeichnet, daß** auf der Unterseite des Vorratsbehälters ein Schieberverschluß oder Klappe vorgesehen ist, der sich in seiner ersten Stellung in Schließstellung befindet und durch in Eingriffbringen mit der Beschichtungseinrichtung geöffnet wird, sobald sich die Beschichtungseinrichtung unter den Vorratsbehälter bewegt.

5. Einrichtung zum Zuführen von Pulver auf eine ebene Fläche(1) einer Einrichtung zum schichtweisen Herstellen eines drei-dimensionales Objektes, mit einer sich in einer ersten Richtung der Fläche quer über diese erstreckenden Beschichtungseinrichtung (3) mit gegenüberliegenden Seitenwänden (4,5), die in einer sich quer zur ersten Richtung erstreckenden zweiten Richtung mittels eines Antriebes zwischen einer seitlichen ersten Stellungund einer auf der gegenüberliegenden Seite liegenden zweiten Stellung hin-und herbewegbar ist und in wenigstens einer der Stellungen von oben mit Pulver befüllbar ist, wobei die Beschichtungseinrichtung (3) einen sich über die gesamte Breite der Fläche erstreckenden oben und unten offenen Raum (6) aufweist und daß ein Vorratsbehälter (9) vorgesehen ist, der Vorratsbehälter (9) in der einen seitlichen Endstellung der Beschichtungseinrichtung (3) an diese zur Beschichtung dienendes Material abgibt, wobei der Raum über seine gesamte Breite auf eine vorbestimmte Höhe befüllt wird,
der Vorratsbehälter sich wenigstens über die gesamte Breite des Raums erstreckt,
und wobei auf der Unterseite des Vorratsbehälters ein Abstreifer, der unmittelbar am oberen Rand der Seitenwände (4,5) der Beschichtungseinrichtung (3) liegt, vorgesehen ist.

6. Einrichtung nach einem der Ansprüche 1 bis 5, **dadurch gekennzeichnet, daß** der Raum als Schlitz (6) ausgebildet ist.

7. Einrichtung nach einem der Ansprüche 1 bis 6, **dadurch gekennzeichnet, daß** die Beschichtungseinrichtung (3) an ihrem der Fläche (1) gegenüberliegenden Ende auf jeder Seite des Raumes (6) ein Glättelement (7,8) aufweist.

8. Einrichtung nach Anspruch 5 bis 7, **dadurch gekennzeichnet, daß** unterhalb des Vorratsbehälters ein Transportband (19) vorgesehen ist, das so angeordnet ist, daß die Füllstellung der Beschichtungseinrichtung in einer Position unterhalb des einen Endes des Transportbandes liegt.

9. Einrichtung nach Anspruch 8, **dadurch gekennzeichnet, daß** das Transportband zum Erzielen der vorbestimmten Füllhöhe für eine einstellbare Zeit bewegbar ist.

10. Einrichtung nach einem der Ansprüche 1 bis 9, **dadurch gekennzeichnet, daß** ein Sensor zum Bestimmen, ob die vorbestimmte Füllhöhe erreicht ist, vorgesehen ist.

11. Einrichtung nach einem der Ansprüche 1 bis 10, **dadurch gekennzeichnet, daß** sie Teil einer Lasersintereinrichtung ist.

12. Lasersintereinrichtung mit einer Einrichtung zum Zuführen von Pulver auf eine ebene Fläche nach einem der Ansprüche 1 bis 11.

## Claims

1. Device for supplying powder onto a planar surface (1) of a device used for producing a three-dimensional object layer by layer, with a coating device (3) which extends in a first direction of the surface transversely over the latter and has opposing side walls (4, 5), which can be moved by means of a drive back and forth in a second direction, extending transversely in relation to the first direction, between a lateral first position and a second position, lying on the opposite side, and in at least one of the positions can be filled from above with powder, the coating device (3) having a space (6) which extends over the entire width of the surface and is open at the top and bottom, and a silo (9) with opposing side walls (11, 12) being provided, the silo (9) discharging in the one lateral end position of the coating device (3) to the latter material serving for coating, the space being filled to a predetermined height over its entire width,
the silo extending at least over the entire width of the space,
and the upper edges of the side walls (4, 5) of the coating device (3) sliding along on the lower edges of the side walls (11, 12) of the silo (9).

2. Device according to Claim 1, **characterized in that** the silo (9) is provided above the coating device (3).

3. Device according to Claim 2, **characterized in that** the volume of the silo (9) per unit length is at least equal to the volume per unit length of the space (6) located under it.

4. Device according to one of Claims 1 to 3, **characterized in that** provided on the underside of the silo is a slide closure or flap, which in its first position is located in the closed position and is opened by being brought into engagement with the coating device as soon as the coating device moves under the silo.

5. Device for supplying powder onto a planar surface (1) of a device used for producing a three-dimensional object layer by layer, with a coating device (3) which extends in a first direction of the surface transversely over the latter and has opposing side walls (4, 5), which can be moved by means of a drive back and forth in a second direction, extending transversely in relation to the first direction, between a lateral first position and a second position, lying on the opposite side, and in at least one of the positions can be filled from above with powder, the coating device (3) having a space (6) which extends over the entire width of the surface and is open at the top and bottom, and a silo (9) being provided, the silo (9) discharging in the one lateral end position of the coating device (3) to the latter material serving for coating, the space being filled to a predetermined height over its entire width,
the silo extending at least over the entire width of the space,
and a stripper which lies directly on the upper edge of the side walls (4, 5) of the coating device (3) being provided on the underside of the silo.

6. Device according to one of Claims 1 to 5, **characterized in that** the space is formed as a slit (6).

7. Device according to one of Claims 1 to 6, **characterized in that** the coating device (3) has at its end opposite from the surface (1) a smoothing element (7, 8) on each side of the space (6).

8. Device according to Claims 5 to 7, **characterized in that** a transporting belt (19), which is arranged in such a way that the filling position of the coating device lies in a position underneath the one end of the transporting belt, is provided underneath the silo.

9. Device according to Claim 8, **characterized in that** the transporting belt is movable for an adjustable time to achieve the predetermined filling height.

10. Device according to one of Claims 1 to 9, **characterized in that** a sensor for determining whether the predetermined filling height has been reached is provided.

11. Device according to one of Claims 1 to 10, **characterized in that** it is part of a laser sintering device.

12. Laser sintering device with a device for supplying powder onto a planar surface according to one of Claims 1 to 11.

## Revendications

1. Dispositif destiné à amener de la poudre sur une surface plane (1) d'un dispositif pour la fabrication par couches d'un objet tridimensionnel, avec un dispositif de formation de couches (3) s'étendant dans une première direction de la surface transversalement au-dessus de celle-ci et possédant des parois latérales (4, 5) opposées, qui peut être déplacé en va-et-vient dans une deuxième direction perpendiculaire à la première direction au moyen d'un dispositif entraînement entre une première position latérale et une seconde position située sur le côté opposé et qui peut être rempli par le haut avec de la poudre dans au moins une des positions, le dispositif de formation de couches (3) présentant un compartiment (6) s'étendant sur toute la largeur de la surface et ouvert vers le haut et le bas, et en ce qu'il est prévu un réservoir (9) avec des parois latérales (11, 12) opposées, le réservoir (9) déposant sur le dispositif de formation de couches (3) dans une position de fin de course latérale de celui-ci du matériau servant à former la couche, le compartiment étant rempli sur toute sa largeur jusqu'à une hauteur prédéterminée, le réservoir s'étendant au moins sur toute la largeur du compartiment, et les bords supérieurs des parois latérales (4, 5) du dispositif de formation de couches (3) glissant le long des bords inférieurs des parois latérales (11, 12) du réservoir (9).

2. Dispositif selon la revendication 1, **caractérisé en ce que** le réservoir (9) est prévu au-dessus du dispositif de formation de couches (3).

3. Dispositif selon la revendication 2, **caractérisé en ce que** le volume du réservoir (9) par unité de longueur est au moins égal au volume par unité de longueur du compartiment (6) qui se trouve en dessous.

4. Dispositif selon l'une ou l'ensemble des revendications 1 à 3, **caractérisé en ce qu'**il est prévu sur la face inférieure du réservoir un tiroir de fermeture ou un volet, qui se trouve dans la position de fermeture dans sa première position et qui est ouvert en se mettant en prise avec le dispositif de formation de couches dès que le dispositif de formation de couches se déplace sous le réservoir.

5. Dispositif destiné à amener de la poudre sur une surface plane (1) d'un dispositif pour la fabrication par couches d'un objet tridimensionnel, avec un dispositif de formation de couches (3) s'étendant dans une première direction de la surface transversalement au-dessus de celle-ci et possédant des parois latérales (4, 5) opposées, qui peut être déplacé en va-et-vient dans une deuxième direction perpendiculaire à la première direction au moyen d'un dispositif d'entraînement entre une première position latérale et une seconde position située sur le côté opposé et qui peut être rempli par le haut avec de la poudre dans au moins une des positions, le dispositif de formation de couches (3) présentant un compartiment (6) s'étendant sur toute la largeur de la surface et ouvert vers le haut et le bas, et en ce qu'il est prévu un réservoir (9), le réservoir (9) déposant sur le dispositif de formation de couches (3) dans la position de fin de course latérale de celui-ci du matériau servant à former la couche, le compartiment étant rempli sur toute sa largeur jusqu'à une hauteur prédéterminée, le réservoir s'étendant au moins sur toute la largeur du compartiment, et dans lequel il est prévu sur la face inférieure du réservoir une racle immédiatement adjacente au bord supérieur des parois latérales (4, 5) du dispositif de formation de couches (3).

6. Dispositif selon l'une ou l'ensemble des revendications 1 à 5, **caractérisé en ce que** le compartiment est conçu comme une fente (6).

7. Dispositif selon l'une ou l'ensemble des revendications 1 à 6, **caractérisé en ce que** le dispositif de formation de couches (3) présente à son extrémité faisant face à la surface (1) de chaque côté du compartiment (6) un élément de lissage (7, 8).

8. Dispositif selon les revendications 5 à 7, **caractérisé en ce qu'**il est prévu en dessous du réservoir une bande transporteuse (19) disposée de telle sorte que la position de remplissage du dispositif de formation de couches se trouve dans une position en dessous d'une extrémité de la bande transporteuse.

9. Dispositif selon la revendication 8, **caractérisé en ce que** la bande transporteuse peut être déplacée pendant une durée réglable pour obtenir un niveau de remplissage prédéterminé.

10. Dispositif selon l'une quelconque de revendications 1 à 9, **caractérisé en ce qu'**il est prévu un capteur pour déterminer si le niveau de remplissage prédéterminé est atteint.

11. Dispositif selon l'une ou l'ensemble des revendications 1 à 10, **caractérisé en ce qu'**il fait partie d'un dispositif de frittage par laser.

12. Dispositif de frittage par laser avec un dispositif destiné à amener de la poudre sur une surface plane selon l'une ou l'ensemble des revendications 1 à 11.
